(19) Europäisches Patentamt
European Patent Office
Office européen des brevets

(11) Veröffentlichungsnummer: **0 142 796**
**B1**

(12) # EUROPÄISCHE PATENTSCHRIFT

(45) Veröffentlichungstag der Patentschrift: **27.01.88**

(51) Int. Cl.⁴: **G 11 B 5/702**, C 09 D 5/23, H 01 F 10/10

(21) Anmeldenummer: **84113554.4**

(22) Anmeldetag: **09.11.84**

(54) **Magnetische Aufzeichnungsträger.**

(30) Priorität: **18.11.83 DE 3341698**

(43) Veröffentlichungstag der Anmeldung: **29.05.85 Patentblatt 85/22**

(45) Bekanntmachung des Hinweises auf die Patenterteilung: **27.01.88 Patentblatt 88/4**

(84) Benannte Vertragsstaaten: **DE FR GB NL**

(56) Entgegenhaltungen:
**DE - A - 2 037 605**
**DE - A - 2 255 802**
**DE - A - 2 442 762**
**DE - B - 2 157 685**

(73) Patentinhaber: **BASF Aktiengesellschaft, Carl-Bosch-Strasse 38, D-6700 Ludwigshafen (DE)**

(72) Erfinder: **Lehner, August, Wachenheimer Strasse 4, D-6701 Roedersheim-Gronau (DE)**
Erfinder: **Balz, Werner, Dr., Kropsburgstrasse 44, D-6703 Limburgerhof (DE)**
Erfinder: **Velic, Milan, Dr., Rembrandtstrasse 1, D-6700 Ludwigshafen (DE)**
Erfinder: **Kopke, Helmut, Goethestrasse 11, D-6714 Weisenheim (DE)**
Erfinder: **Grau, Werner, Dr., Tuchbleiche 5, D-6712 Bobenheim-Roxheim (DE)**
Erfinder: **Baur, Reinhold, Dr., Strassburger Strasse 15a, D-7600 Offenburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft magnetische Aufzeichnungsträger aus einem nichtmagnetischen Trägermaterial, das mit einer Magnetschicht aus in Bindemitteln und Zusatzstoffen dispergiertem, feinteiligem anisotropen magnetischen Material versehen ist und wobei das Bindemittel ein Gemisch auf der Basis eines OH-gruppenhaltigen Polyurethans, das mit Polyisocyanaten vernetzt wird, und weiteren physikalisch trocknenden Bindemitteln ist.

An Magnetschichten, die in modernen Audio- und Videoaufzeichnungs- und Wiedergabegeräten verwendet werden, werden Anforderungen in mehrfacher Hinsicht gestellt. Neben den hohen Anforderungen an die Aufzeichnungs- und Wiedergabeeigenschaften, für die Anwendung von Audiobändern, Videobändern und flexiblen Datenträgern, wird vor allem bezüglich der mechanischen Eigenschaften der Aufzeichnungsträger eine ständige Anpassung und Verbesserung gefordert. Die Magnetschichten müssen sehr flexibel sein, eine hohe Elastizität aufweisen und eine hohe Reissfestigkeit besitzen. Ausserdem wird, zur Vermeidung von Pegeleinbrüchen, zunehmend eine Verringerung der Reibungswerte sowie eine Erhöhung der Abrieb- und Verschleissfestigkeit gefordert. Besonders die Forderung nach Systemen mit denen ohne Haftvermittler eine gute Magnetschichthaftung auf der Trägerfolie erreicht wird, gestaltet sich besonders dann schwierig, wenn gleichzeitig eine gute Klimastabilität und hohe magnetische und elektroakustische Werte benötigt werden.

Da magnetische Aufzeichnungsträger zur Verbesserung der elektroakustischen Eigenschaften mit Schichten geringer Oberflächenrauhigkeit versehen werden, können weiche thermoplastische Magnetschichten schon bei 20 bis 30 °C, besonders aber bei höheren Temperaturen und hoher Luftfeuchtigkeit zum Verkleben neigen. Dadurch blockieren die Bänder. Bei etwas rauherer Magnetschicht können diese Schwierigkeiten nur auf Kosten der elektroakustischen Eigenschaften behoben werden.

Um diese Fehler zu vermeiden, ist es erforderlich, neben der Verwendung besonders geeigneter magnetischer Materialien, wie Chromdioxid, cobaltdotierten Eisenoxiden und ferromagnetischen Metallteilchen, die in der magnetschicht insgesamt enthaltenen Materialien so auszuwählen, dass die Magnetschichten neben der besonders hohen remanenten Magnetisierung in der Aufzeichnungsrichtung und bei den geforderten glatten Oberflächen verbesserte mechanische Eigenschaften aufweist. Solche Magnetschichten müssen einen hohen Anteil an magnetisierbarem Material in der Magnetschicht haben und diese magnetisierbaren nadelförmigen Teilchen müssen sich in der Magnetschicht sehr gut entlang der vorgesehenen Aufzeichnungsrichtung orientieren lassen. Gerade die Verbesserung der genannten Eigenschaften, wie Oberflächenrauhigkeit, Remanenz und Ausrichtungsgrad bei gleichzeitig hervorragenden mechanischen Eigenschaften sind bei ein und demselben magnetischen Material von den zur Herstellung der Magnetschicht verwendeten Bindemitteln und Zusatzstoffen abhängig. Von den Zusatzstoffen sind in erster Linie die sogenannten Gleitmittel, Hydrophobierungsmittel und Dispergiermittel zu nennen, welche durch ihren Einsatz die elektroakustischen, magnetischen und mechanischen Eigenschaften der Bänder beeinflussen.

Die Verminderung der Oberflächenrauhigkeit der Magnetschicht ist bei hochwertigen magnetischen Aufzeichnungsträgern besonders wichtig, da für die Auflösung kleinster Wellenlängen ein besonders enger Band/Kopf-Kontakt erforderlich ist. Daraus ergeben sich die hohen Anforderungen, die an die Verschleissfestigkeit der Bänder gestellt werden, denn eine Beschädigung der Schicht führt sofort zu Pegeleinbrüchen.

Zur Lösung der aufgezeigten Probleme wurde bereits eine Vielzahl von Versuchen durchgeführt. So sollten Abmischungen bei den Bindemitteln, wie z. B. hochpolymere Polyurethane mit anderen Polymeren Abhilfe schaffen. Derartige Mischungen bewirken jedoch meist nicht ausreichende magnetische bzw. elektroakustische Eigenschaften. Es wurde auch schon vorgeschlagen, spezielle OH-gruppenhaltige Polyurethanbindemittel, die mit Polyisocyanaten vernetzt werden, allein oder in Abmischung mit einem Phenoxharz oder einem hochmolekularen Polyurethan oder einem Polyvinylformal oder einem Celluloseester zu verwenden. Damit lassen sich zwar sehr gute magnetische und elektroakustische Eigenschaften in Verbindung mit verringerter Fehlerzahl, guten Reibungswerten und hoher Verschleissfestigkeit erhalten, unbefriedigend ist jedoch, dass insbesondere die Klimabeständigkeit, d. h. die Stabilität bei hoher Temperatur und hoher Luftfeuchtigkeit, zu gering ist. Die vielfältigen Versuche, durch Kombination von mehreren Massnahmen Nachteile und Mängel, wie z. B. zu hohe Thermoplastizität, zu geringe Tropenfestigkeit, zu niedrige Abriebfestigkeit nach Klimalagerung, Pegeleinbrüche durch schlechte Dauerlaufeigenschaften zu beheben oder doch zumindest in dem einen oder anderen Fall günstig zu beeinflussen, haben nicht immer befriedigt. Für eine Optimierung besonders bei Verwendung unterschiedlicher Bindemittelsysteme reichten die bisher vorgeschlagenen Lösungen deshalb nur ungenügend aus, besonders dann, wenn gleichzeitig hohe magnetische und elektroakustische Werte erreicht werden müssen.

Es bestand daher die Aufgabe, durch einfache Massnahmen magnetische Aufzeichnungsträger bereitzustellen, bei denen durch Einsatz geeigneter Bindemittelkombinationen die Haftung und die Tropenfestigkeit verbessert wir und dabei gleichzeitig Thermoplastizität und Reibwerte nach einer Klimalagerung sowie die magnetischen und elektroakustischen Eigenschaften nicht verschlechtert werden. Weiterhin soll das Abblättern der Schicht vom Trägermaterial und Pegeleinbrüche vermieden sowie das Blocken der Bänder bei extremen Bedingungen verhindert werden.

Es wurde nun gefunden, dass magnetische Aufzeichnungsträger aus einem nichtmagnetischen Trägermaterial, das mit einer Magnetschicht aus in Bindemitteln und Zusatzstoffen dispergiertem, feinteiligem anisotropem megnetischem Material versehen ist und wobei das Bindemittel ein Gemisch aus einem niedermolekularen OH-gruppenhaltigen Polyharnstoffurethan, das als unpigmentierter mit Polyisocyanat vernetzter Film eine Reissfestigkeit von grösser 15 $N/mm^2$, eine Reissdehnung von grösser 50%, einen E-Modul von grösser 150 $N/mm^2$ und eine Pendelhärte von 30 bis 140 s aufweist, einem hochmolekularen, thermoplastischen, in Tetrahydrofuran löslichen, linearen Polyurethan, dessen unpigmentierter Film eine Reissfestigkeit zwischen 40 und 95 $N/mm^2$ und eine Reissdehnung von 100 bis 1400% aufweist, und einem weiteren physikalisch trocknenden Bindemittel ist, die gestellten Anforderungen erfüllen, wenn das Bindemittelgemisch aus

1. 50 bis 90 Gew.% eines niedermolekularen OH-gruppenhaltigen Polyharnstoffurethans mit einer OH-Zahl zwischen 30 und 130 und einem Molekulargewicht zwischen 2000 und 30000, welches aus

1.IA 1 Mol eines Polydiols mit einem Molekulargewicht zwischen 400 und 4000,

1.IB 0,2 bis 10 Mol eines Diols mit 2 bis 18 Kohlenstoffatomen,

1.IC 0,1 bis 4 Mol eines primären oder sekundären Aminoalkohols mit 2 bis 20 Kohlenstoffatomen,

1.ID 0 bis 1 Mol eines Triols und

1.II 1,20 bis 13 Mol eins Diisocyanats mit 6 bis 30 Kohlenstoffatomen, wobei der Anteil der NCO-Gruppen des Diisocyanats, bezogen auf die Komponenten 1. IA bis 1. ID, 65 bis 95% der äquivalenten Menge an OH- und NH-Gruppen beträgt, hergestellt worden ist,

2. 5 bis 45 Gew.% eins hochmolekularen, thermoplastischen, in Tetrahydrofuran löslichen linearen Polyurethans mit einem Molekulargewicht zwischen 40000 und 150000, welches aus

2.A 1 Mol eines Polyesterols mit einem Molekulargewicht zwischen 400 und 4000,

2.B 0,3 bis 15 Mol eines geradkettigen alipathischen Diols mit 2 bis 10 Kohlenstoffatomen,

2.C 0 bis 1,5 Mol eines Triols mit 3 bis 10 Kohlenstoffatomen und

2.D 1,25 bis 17 Mol eines Diisocyanats mit 6 bis 30 Kohlenstoffatomen, wobei die Menge an NCO-Gruppen etwa äquivalent der Menge an OH-Gruppen der Summe der Komponenten 2.A bis 2.C ist, hergestellt worden ist und

3. 5 bis 45 Gew.% eines Polyvinylformalbindemittels mit einem Vinylformalgruppengehalt von mindestens 65%, oder
eines Copolymeren aus 50 bis 95 Gew.% Vinylchlorid und 5 bis 50 Gew.% eines Mono- oder Diesters eines aliphathischen Diols mit 2 bis 4 Kohlenstoffatomen mit Acrylsäure oder Methacrylsäure, oder eines Phenoxyharzes, dessen Konstitution der Formel

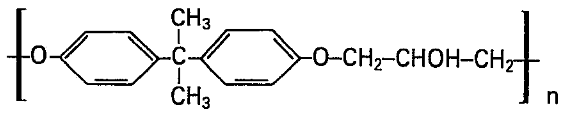

mit n annähernd gleich 100 entspricht, oder
eines Di- und/oder Triesters der Cellulose mit mindestens einer Carbonsäure mit 1 bis 4 Kohlenstoffatomen, oder
eines Copolymerisats aus 91% Vinylchlorid-, 3% Vinylacetat- und 6% Vinylalkoholgrundheiten,
besteht und das niedermolekulare Polyharnstoffurethan und das hochmolekulare Polyurethan mit einer Polyisocyanatkomponente in einem OH: NCO-Verhältnis von 1:0,3 bis 1:2,0 vernetzt worden sind.

Entsprechende Bindemittelmischungen mit einem Anteil von 50 Gew.-% des niedermolekularen Polyharnstoffurethans (Komponente 1) sind auch in der EP-A-O 142 798, angemeldet am 9.11.84 unter Beanspruchung der deutschen Priorität vom 18.11.83 und veröffentlicht am 29.5.85 vorgeschlagen worden und sind nicht Gegenstand vorliegender Erfindung.

Die beim erfindungsgemässen Aufzeichnungsträger eingesetzten, mit Polyisocyanaten vernetzten, OH-gruppenhaltigen Polyharnstoffurethanbindemittel (Komponente 1) sind dadurch charakterisiert, dass sie als unpigmentierte Filme nach der Vernetzung eine Reissfestigekit (Nach DIN 53455) von grösser 15, vorzugsweise grösser 30 $N/mm^2$, eine Reissdehnung (nach DIN 53455) von grösser 50, vorzugsweise grösser 70% und einen E-Modul (nach DIN 53457) von grösser 150, vorzugsweise grösser 200 $N/mm^2$, aufweisen und die Pendelhärte (nach DIN 53157) zwischen 30 und 140 s, vozugsweise 50 bis 110 s, liegt. Die OH-Zahl der Komponente 1 beträgt 30 bis 130, vorzugsweise 40 bis 120. Das Molekulargewicht (Zahlenmittel) ist zwischen 2000 und 30000, entsprechend einem K-Wert zwischen 17 und 45, vorzugsweise zwischen 2500 und 25000, entsprechend einem K-Wert zwischen 19 und 35.

Beim Aufbau dieser Polymeren hat es sich als zweckmässig erwiesen, dass die OH-Endgruppen zum Teil, vorzugsweise über 70% und insbesondere zu mehr als 90% aus folgenden Resten bestehen:

$$-NH-CO-NR^1-R-OH \text{ oder}$$

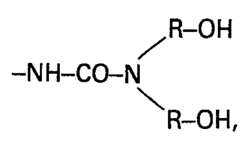

wobei $R = -(CH_2)-_n$
$R^1 = H, -CH_3, -(CH_2)_n-CH_3$ und
$n = 1$ bis 10

bedeuten.

In dieser Weise aufgebaute Polymere weisen gegenüber solchen ohne diese Endgruppen eine verringerte Thermoplastizität auf. Weiterhin besteht dadurch die Möglichkeit, den Gehalt an OH-Endgruppen zu erhöhen, wodurch bei der Vernetzung mit Polyisocyanat der Vernetzungsgrad, entsprechend den Anforderungen an die Magnetschicht, in weiten Grenzen variieren kann. Ebenfalls von Vorteil sind die Harnstoffgruppen, welche die Dispergierfähigkeit gegenüber den üblichen magnetischen Materialien erhöhen.

Zur Herstellung der Komponente 1 wird als Baustein 1.IA ein Polydiol mit einem Molekulargewicht von 400 bis 4000, bevorzugt von 700 bis 2500, eingesetzt. Hierzu eignen sich die bekannten Polyesterole, Polyetherole, Polycarbonate und Polycaprolatame.

Die Polyesterole sind zweckmässigerweise überwiegend lineare polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher Weise durch Veresterung von alipathischen Dicarbonsäuren mit 4 bis 12 C-Atomen, vorzugsweise 4 bis 6 C-Atomen, mit aliphathischen Glykolen, bevorzugt Glykolen mit 2 bis 12 C-Atomen oder durch Polymerisation von Lactonen mit 3 bis 6 C-Atomen herstellen. Als aliphathische Dicarbonsäure lassen sich beispielsweise Glutarsäure, Pimelinsäure, Korksäure, Sebacinsäure, Dodecandisäure und vorzugsweise Adipinsäure und Bernsteinsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureester mit 1 bis 4 Kohlenstoffatomen im Alkoholrest, Carbonsäureanhydride oder Carbonsäurechloride zu verwenden. Beispiele für geeignete Glykole sind Diethylenglykol, Pentandiol, Decandiol-1,10 und 2,2,4-Trimethylpentandiol-1,5. Vorzugsweise verwendet werden Ethandiol-1,2, Butandiol-1,4, Hexandiol-1,6 und 2,2-Dimethylpropandiol-1,3. Je nach den gewünschten Eigenschaften der Polyurethane können die Polyole allein oder als Mischungen in verschiedenen Mengenverhältnissen verwendet werden. Als Lactone für die Herstellung der Polyesterole eignen sich $\alpha$, $\alpha$-Dimethyl-$\beta$-propiolacton, $\gamma$-Butyrolacton und vorzugsweise $\varepsilon$-Caprolacton.

Die Polyetherole sind im wesentlichen lineare, endständige Hydroxylgruppen aufweisende Substanzen, die Etherbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran oder durch Umsetzung von einem oder mehreren Alkylenoxiden mit 2 bis 4 Kohlenstoffatomen im Alkylenrest mit einem Startermolekül, das zwei aktive Wasserstoffatome gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die alkylenoxide können einzeln, alternierend nacheinander oder als Mischungen verwendet werden. Als Startermoleküle kommen beispielsweise in Betracht: Wasser, Glykole, wie Ethylenglykol, Propylenglykol, Butandiol-1,4 und Hexandiol-1,6, Amine, wie Ethylendiamin, Hexamethylendiamin und 4,4'-Diamino-diphenylmethan und Aminoalkohole, wie Ethanolamin. Ebenso wie die Polyesterole können auch die Polyetherole allein oder in Mischungen verwendet werden.

Als Baustein 1.IB werden Diole mit 2 bis 18 Kohlenstoffatomen, vorzugsweise 2 bis 6 C-Atomen, eingesetzt, so zum Beispiel Ethandiol-1,2, Propandiol-1,3, Butandiol-1,4, Hexandiol-1,6, Pentandiol-1,5, Decandiol-1,10, 2-Methyl-1,3-propandiol, 2,2-Dimethyl-1,3-propandiol, 2,2-Dimethyl-1,4-butandiol, 2-Methyl-2-butyl-1,3-propandiol, Hydroxypivalinsäureneopentylglykolester, Diethylenglykol, Triethylenglykol und Methyldiethanolamin.

Im Rahmen der Herstellung der OH-gruppenhaltigen Polyharnstoffurethane hat es sich hinsichtlich besonderer Eigenschaften der erfindungsgemässen Aufzeichnungsträger als zweckmässig erwiesen, für die Bausteine 1.IB ganz oder teilweise Diamine mit 2 bis 15 Kohlenstoffatomen wie Ethylendiamin, 1,6-Hexamethylendiamin, 4,9-Dioxadodecan-1,12-diamin, 4,4'-Diaminodiphenylmethan oder Aminoalkohole wie z. B. Monoethanolamin, Monoisopropanolamin und 4-Methyl-4-aminopentanol-2 einzusetzen.

In gleicher Weise können als Bausteine 1.IB die genannten Diole auch ganz oder teilweise durch Wasser oder die nachstehend auch als Bausteine 1.IC angeführten primären oder sekundären Aminoalkohole ersetzt werden.

Diese Aminoalkohole (Baustein 1.IC)mit 2 bis 20, vorzugsweise 3 bis 6 Kohlenstoffatomen, sind u. a. Monoethanolamin, Methylisopropanolamin, Ethylisopropanolamin , Methylethanolamin, 3-Aminopropanol, 1-Ethylaminobutanol-2, 4-Methyl-4-aminopentanol-2, N-(2-Hydroxyethyl)anilin. Sekundäre Aminoalkohole sind besonders geeignet, da durch ihre Anlagerung am Kettenende die Löslichkeit der Polymeren verbessert wird. Als besonders günstig haben sich Methylethanolamin, Diethanolamin und Diisopropanolamin erwiesen.

Als Triole (Baustein 1.ID) werden Verbindungen mit 3 bis 18, vorzugsweise 3 bis 6 C-Atomen, angewandt. Beispiele für entsprechende Triole sind Glycerin, Trimethylopropan und Hexantriol. Geeignet sind auch niedermolekulare Umsetzungsprodukte, z. B. aus Glycerin oder Trimethylopropan mit Ethylenoxyd und/oder Propylenoxyd. Das Vorhandensein von Triolen bei der Polyaddition führt zu einer Verzweigung des Endproduktes, was sich, sofern keine örtliche Vernetzung auftritt, positiv auf die mechanischen Eigenschaften des Polyurethans auswirkt.

Zur Bildung der OH-gruppenhaltigen Polyharnstoffurethane werden die unter 1.I genannten Bausteine mit aliphatischen, cycloaliphatischen oder aromatischen Diisocyanaten mit 6 bis 30 Kohlenstoffatomen (Baustein 1.II) umgesetzt. zu diesem Zweck eignen sich besonders Verbindungen wie Toluylen-2,4-diisocyanat, Toluylen-2,6-diisocyanat, m-Phenylendiisocyanat, 4-Chlor-1,3-Phenylendiisocyanat, 1,5-Naphtylendiisocyanat, 1,6-Hexamethylendiisocyanat, 1,4-Cyclohexylendiisocyanat und 1,5-Tetrahydronaphtylendiisocyanat, Diphenylmethandiisocyanat, Dicyclohexylmethandiisocyanat oder Isophorondiiscyanat. Die OH-gruppenhaltigen Polyrethane auf Basis von Toluylendiisocyanat und Isophrondiisocyanat zeichnen sich durch ihre gute Löslichkeit in Tetrahydrofuran und Dioxan aus.

Das Verhältnis der Bausteine 1.I und 1.II zueinander kann von 1,20 bis 13 Mol Diisocyanat je Mol Polydiol bei Verwendung von 0,2 bis 10, vorzugsweise 0,5 bis 5 Mol des geradkettigen aliphatischen Diols mit 2 bis 18 C-Atomen und gegebenenfalls 0,01 bis 1 Mol, vorzugsweise 0,15 bis 0,5 Mol, Triol variiert werden, wobei die Menge des verwendeten geradkettigen Diols teilweise von dem Molekulargewicht des verwendeten Polydiols abhängt. Die Menge des angewandten Isocyanats sollte zu 5 bis 35% im Unterschuss, bezogen auf die Mengen der NH- oder hydroxylhaltigen Verbindungen vorliegen, so dass am Ende der Reaktion praktisch kein freies, nicht umgesetztes Isocyanat, aber freie, nicht umgesetzte Hydroxylgruppen verbleiben. Aus praktischen und lacktechnischen Gründen ist es jedoch häufig zweckmässig, in einer Vorreaktion der Bausteine 1.IA, 1.IB, 1.ID und 1.II einen Diisocyanatüberschuss von 5 bis 40%, bevorzugt 10 bis 30%, bezogen auf die zur vollständigen Umsetzung der Reaktionsteilnehmer erforderliche Menge, zu verwenden, so dass das Verhältniss der Zahl der eingesetzten Hydroxylgruppen zur Zahl der Isocyanatgruppen in dieser Reaktionsstufe ungefähr 1:1,05 bis 1:1,4 vorzugsweise ungefähr 1:1,1 bis 1:1,30 beträgt. In der zweiten Reaktionsstufe wird dann eine dem NCO-Gehalt entsprechende NH-äquivalente Menge des Bausteins 1.IC, d.h. 0,1 bis 4, vorzugsweise 0,3 bis 2,5 Mol je Mol des Bausteins 1.IA, zugesetzt, bzw. das NCO-Präpolymere wird zum Aminoinhalt gegeben, so dass die Aminogruppen mit dem Isocyanat reagieren. Durch Variation der Aminoalkohole ergeben sich selbst bei Polyurethanen die keine Triole enthalten Polyurethane mit einer OH-Funktionalität zwischen 2 und 4, wobei die OH-Gruppen vorwiegend am Kettenende sind. Verwendet man Polyurethane, in die Triole eingebaut sind, so erhöht sich dadurch die OH-Funktionalität entsprechend. Dieser Aufbau ist für die Filmbildung und für die abschliessende Vernetzung des OH-gruppenhaltigen Polyurethans mit dem Polysocyanat von Vorteil. Wird in dieser zweiten Reaktionsstufe ein geringer Unterschuss an NH- bzw. $NH_2$-Gruppen gegenüber den NCO-Gruppen angeboten, dann wird ein Teil des Aminoalkohols in das Molekül eingebaut und ergibt je nach Aminoalkohol eine Verzweigungsstelle. Verwendet man einen Überschuss an NH-Gruppen, dann wird der Aminoalkohol erst bei der Vernetzungsreaktion völlig in den Polymerverband eingebaut. Damit ist es durch die Auswahl, d.h. durch Variation der Endgruppen, möglich, das Polymere den jeweiligen Anforderungen, wie die Fähigkeit zur Filmbildung und zur Dispergierung, anzupassen.

Die so aufgebauten thermoplastischen, elastischen OH-gruppenhaltigen Polyharnstoffurethane werden bevorzugt in Lösung nach dem 2-Stufenverfahren, gegebenenfalls in Gegenwart von Katalysatoren und anderen Hilfsmitteln und/oder Zusatzstoffen hergestellt. Diese Produkte nach dem lösungsmittelfreien Batch-Verfahren herzustellen, ist auch möglich. Da sich aber aufgrund der eventuellen Anwesenheit des Triols und der Reaktion von Amin mit NCO-Gruppen bei der Substanzpolyaddition zumindest teilweise Gel-Teilchen bilden, wird meist in Lösung gearbeitet. Allgemein wird bei der Lösungspolyaddition die Gefahr einer örtlichen Übernetzung, wie sie bei der Substanzpolyaddition auftritt, vermieden.

Als Lösungsmittel für die Herstellung der Polyurethane werden vorzugsweise cyclische Ether, wie Tetrahydrofuran und Dioxan, und cyclische Ketone, wie Cyclohexanon, verwendet. Selbstverständliche können je nach Anwendungsgebiet die Polyurethane auch in anderen stark polaren Lösungsmitteln, wie Dimethylformamid, N-Methylpyrrolidon, Dimethylsufoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert. Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommmenden Katalysators. Im allgemeinen hat es sich als zweckmässig erwiesen, 0,005 bis 0,3 Gewichtsteile, vorzugsweise 0,01 bis 0,1 Gewichtsteile für jeweils 100 Gewichtsteile Polyurethan zu verwenden.

Beim 2-Stufenpolyadditionsverfahren wird das Diisocyanat vorgelegt, dann werden die Bausteine 1.IA, 1.IB und 1.ID und gegebenenfalls der Katalysator und die Hilfs- und Zusatzstoffe in Lösungsmittel bei Temperaturen von 20 bis 90 °C, vorzugsweise 30 bis 70 °C, in 0,5 bis 5 Stunden zugegeben. Die Komponenten werden bis zum gewünschten NCO-Gehalt umgesetzt, dann wird in der 2. Stufe der Baustein 1.IC zugesetzt oder der Baustein 1.IC wird vorgelegt und das Polymere zugegeben. Beim 2-Stufenverfahren wird in der ersten mit einem NCO-Überschuss, gegenüber den Bausteinen 1.IA, 1.IB und 1.ID, gearbeitet.

Die im Bindemittelgemisch für die erfindungsgemässen Aufzeichnungsträger als Komponente 2 enthaltenen Polyurethanelastomeren sind bekannt. Sie werden ebenso wie ihre Herstellung

u. a. in den DE-ASen 2442763 und 2753694 beschrieben.

Die als hochmolekulare Bindemittel in den Magnetschichten verwendeten Polyurethane sind dann besonders geeignet, wenn sie einen K-Wert zwischen 50 und 70 und einen Blockpunkt von mindestens 120 °C aufweisen, die Reissdehnung zwischen 100 und 1400% (DIN 53455) und die Reissfestigkeit zwischen 40 und 95 N/mm² (DIN 53455) liegt. Besitzen diese Polyurethane ausserdem noch OH-Endgruppen, die einer Vernetzung leicht zugänglich sind, ist dies von besonderem Vorteil.

Die im Bindemittelgemisch für die erfindungsgemässen Aufzeichnungsträger als Komponente 3 enthaltenen physikalisch trocknenden Bindemittel sind bekannt. Es handelt sich hierbei um ein Polyvinylformal-Bindemittel, welches durch Hydrolyse eines Polymerisats eines Vinylesters und anschliessende Umsetzung des Vinylalkohol-Polymeren mit Formaldehyd hergestellt wurde. Die Polyvinylformale haben zweckmässigerweise einen Vinylformalgruppengehalt von mindestens 65 Gew.% und insbesondere mindestens 80 Gew.%. Geeignete Polyvinylformale gaben einen Gehalt an Vinylalkohol-Gruppen von 5 bis 13 Gew.%, einen Gehalt an Vinylformal-Gruppen von 80 bis 88 Gew.%, ein spezifisches Gewicht von ca. 1,2 und eine Viskosität von 50 bis 120 Centipoise gemessen bei 20 °C mit einer Lösung von 5 g Polyvinylformal in 100 ml Phenol-Toluol (1:1). In gleicher Weise geeignet sind neben dem Polyvinylformal Vinylchlorid-Diol-mono- oder -di-(meth)acrylat-Copolymerisate, die sich z. B. in an sich bekannter Weise durch Lösungscopolymerisation oder Suspensionscopolymerisation von Vinylchlorid und dem Diol-monomethacrylat oder -monoacrylat herstellen lassen. Das hierfür zum Einsatz gelangende Diolmono- oder -di-acrylat oder -methacrylat ist ein Veresterungsprodukt von Acrylsäure oder Methacrylsäure mit der entsprechenden molaren Menge an aliphathischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.% 1,2-Propandiol besteht. Die Copolymerisate haben zwekcmässigerweise einen Vinylchloridgehalt von 50 bis 95 Gew.% und einem Diolacrylat- oder -methacrylat-Gehalt von 5 bis 50 Gew.%. Besonders geeignete Copolymerisate besitzen vorzugsweise einen Gehalt von 70 bis 90 Gew.% Vinylchlorid und 10 bis 30 Gew.% Diolmonoacrylat bzw. Diolmonomethacrylat. Eine 15%ige Lösung besonders geeigneter Copolymerisate wie der Vinylchlorid-Propandiolmonoacrylat-Copolymerisate in einem Gemsich aus gleichen Volumenteilen von Tetrahydrofuran und Dioxan weist bei 25 °C eine Viskosität von etwa 30 mP.s auf. Der K-Werte nach H. Fikentscher (Cellulosechemie 30 (1931), S. 58 ff.) der besonders geeigneten Produkte liegt zwischen 30 und 50, vorzugsweise bei etwa 40.

Ausserdem lassen sich als Komponente 3 vorteilhaft Phenoxyharze, deren Konstitution mit der wiederkehrenden Formel

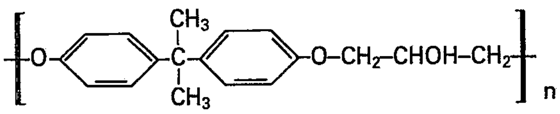

in der n annähernd gleich 100 ist, zu beschreiben ist, einsetzen. Es handelt sich hierbei um Polymere, wie sie in der DE-AS 1295011 beschrieben sind und wie sie unter den Handelsbezeichnungen ®Epikote der Firma Shell Chemical Co. oder unter der Bezeichnung ®Epoxidharz PKHH der Union Carbide Corporation bekannt sind.

In gleicher Weise eignen sich Celluloseester-Bindemittel zur Verwendung als Komponente 3 in dem bezeichneten Bindemittelgemisch. Dies sind Veresterungsprodukte der Cellulose mit Carbonsäuren mit 1 bis 4 Kohlenstoffatomen, wie z. B. Celluloseacetat, Cellulosetriacetat, Celluloseacetopropionat, Celluloseacetobutyrat. Auch Copolymerisate aus 91% Vinylchlorid-, 3% Vinylacetat- und 6% Vinylalkoholeinheiten lassen sich hier einsetzen.

Zur Erzielung von speziellen Eigenschaften kann es von Vorteil sein, wenn die Komponenten 1 bis 3 aus jeweils zwei unterschiedlichen Polymeren zusammengesetzt sind.

Die weitere Verarbeitung des aus den Komponenten 1, 2 und 3 bestehenden Bindemittelgemischen mit magnetischen Materialien und Hilfsstoffen zu den erfindungsgemässen magnetischen Aufzeichnungsträgern erfolgt in an sich bekannter Weise.

Als anisotrope magnetische Materialien können die an sich bekannten verwendet werden, die die Eigenschaften der resultierenden Magnetschichten wesentlich beeinflussen, wie zum Beispiel Gamma-Eisen(III)-oxid, feinteiliger Magnetit, ferromagnetisches undotiertes oder dotiertes Chromdioxid oder kobaltmodifiziertes Gamma-Eisen(III)-oxid.

Bevorzugt sind nadelförmiges Gamma-Eisen-(III)-oxid sowie ferromagnetisches Chromdioxid. Die Teilchengrösse beträgt im allgemeinen 0,2 bis 2 µm, bevorzugt ist der Bereich von 0,3 bis 0,8 µm.

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Russ usw. Die Menge der Zusätze ist die an sich übliche, sie liegt im allgemeinen unter 10 Gew.%, bezogen auf die Magnetschicht.

Das Mengenverhältnis von magnetischem material zu Bindemittel in den erfindungsgemässen

Aufzeichnungsmaterialien liegt zwischen 1 bis 10 und insbesondere 3 bis 6 Gewichtsteilen magnetisches Material auf ein Gewichtsteil des Bindemittelgemisches. Es ist ein besonderer Vorteil, dass aufgrund des vorzüglichen Pigmentbindevermögens der speziellen Polyurethane hohe Magnetmaterialkonzentrationen in den Magnetschichten möglich sind, ohne dass die mechanisch-elastischen Eigenschaften verschlechtert oder die Anwendungseigenschaften merklich in Mittleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephtalat, im allgemeinen in Stärken von 4 bis 200 µm und insbesondere von 10 bis 36 µm. In neuerer Zeit ist auch die Anwendung von Magnetschichten auf Papierträgern für Zwecke der mittleren Datentechnik bedeutend geworden; auch hierfür lassen sich die erfindungsgemässen Beschichtungsmassen vorteilhaft verwenden.

Die Herstellung der erfindungsgemässen magnetischen Aufzeichnungsträger kann in bekannter Weise erfolgen. Zweckmässig wird die in einer Dispergiermaschine, z.B. einer Topfkugelmühle oder einer Rührwerksmühle, aus dem magnetischen Material und einer Lösung der Bindemittel unter Zusatz von Dispergiermitteln und anderen Zusätzen hergestellte Magnetpigmentdispersion nach dem Zumischen des Polysocyanatvernetzers filtriert und mit der üblichen Beschichtungsmaschine, z.B. mittel eines Linealgiessers, auf den nichtmagnetischen Träger aufgetragen. Zur Erzielung von hohen Ela- und Magnetwerten bei einer kürzeren Dispergierzeit ist es von Vorteil, die Dispergierung mit der Komponente 1 durchzuführen und die Komponenten 2 und 3 nach der Dispergierung einzurühren. Dieses Verfahren bietet sich an, denn die genannten Komponenten 2 und 3 sind mit der Komponente 1 gut verträglich. In der Regel erfolgt eine magnetische Ausrichtung, bevor die flüssige Beschichtungsmischung auf dem Träger getrocknet wird; letzteres geschieht zweckmässigerweise in 2 bis 5 min bei Temperaturen von 50 bis 90 °C. Die Magnetschichten können auf übleichen Maschinen mittels Hindurchführen zwischen geheizten und polierten Walzen, gegebenenfalls bei Anwendung von Druck und Temperaturen von 25 bis 100 °C, vorzugsweise 60 bis 80 °C, geglättet und verdichtet werden. Die Dicke der Magnetschicht beträgt im allgemeinen 2 bis 20 µm, vorzugsweise 4 bis 10 µm. Im Falle der Herstellung von Magnetbändern werden die beschichteten Folien in der Längsrichtung in den üblichen, meist nach Zoll festgelegten Breiten geschnitten.

Wesentlich für die vorteilhaften Eigenschaften der erfindungsgemässen magnetischen Aufzeichnungsträger ist die Vernetzung des Polyurethanbindemittels mit Polyisocyanaten. Für die Vernetzung kann eine Vielzahl organischer Di-, Tri- oder Polyisocyanate oder Isocyanatprepolymerer bis zu einem Molgewicht von 10000, vorzugsweise zwischen 500 und 3000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol.

Die Menge an zugesetzten Polyisocyanatkomponente entspricht, bezogen auf die OH-Gruppen der zu vernetzenden Polyurethanbindemittel, einem OH:NCO-Verhältnis von 1:0,3 bis 1:2,0, vorzugsweise von 1:0,5 bis 1:1,5.

Die erfindungsgemässen magnetischen Aufzeichnungsträger weisen gegenüber solchen, welche mit dem Stand der Technik entsprechenden Polyurethane und Polyurethanharnstoff enthaltenden Bindemittelmischungen hergestellt sind eine verbesserte Haftung bei gleichzeitiger Klimabeständigkeit mit guten elektroakustischen Eigenschaften, insbesondere sowohl hinsichtlich der Höhen- und Tiefenaussteuerbarkeit als auch der Empfindlichkeit, auf. Ausserdem ist wesentlich, dass sich damit die bekannten magnetischen Materialien in üblichen Dispergiereinrichtungen leicht und vor allem mit sehr geringem Zeit- und Energieaufwand zu homogenen hochpigmentierten Dispersionen verarbeiten lassen. Hervorzuheben ist weiterhin der bis zu 40% geringere Lösungsmittelbedarf beim Dispergierprozess. Damit können in vereinfachter und verkürzter Arbeitsweise magnetisch und damit auch elektroakustisch wesentlich verbesserte magnetische Aufzeichnungsträger erhalten werden.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

Beispiel A:

Polymer A (Komponente 1)

100,05 g Toluylendiisocyanat, gelöst in 107 g Tetrahydrofuran wurden auf 60 °C erhitzt und mit einem Tropfen Dibutylzinndilaurat versetzt. Dazu wurden innerhalb von 2,5 Stunden 150 g eines OH-gruppenhaltigen Polyesters aus Adipinsäure und Butandiol-1,4 mit einem Molekulargewicht von 1000 und 41, 2 g Hexandiol gelöst in 200 g Tetrahydrofuran gegeben. Nach einer Stunde wurde nochmals ein Tropfen Dibutylzinndilaurat zugegeben. Nach Erreichen eines NCO-Gehaltes von 1,05% wurde auf 45 °C abgekühlt und danach 15,75 g Diethanolamin zugesetzt. Das resultierende Produkt wies einen Feststoffgehalt von 50%, eine OH-Zahl von 55 und einen K-Wert von 24 bis 28 auf.

Beispiel B:

Polymer B (Komponente 1)

Die Herstellung erfolgte wie bei Polymer A, jedoch aus folgenden Bausteinen: 135,9 g Toluylendiisocyanat, 192,1 g Diphenylmethandiisocyanat,

640,5 g des in Beispiel A genannten Polyesters, 71 g Hexandiol-1,6, 3,43 g Trimethylolpropan, 56,6 g Diethanolamin, 0,6 g Dibutylzinndilaurat und 1100 g Tetrahydrofuran. Das resultierende Produkt wies einen Feststoffgehalt von 50%, eine OH-Zahl von 55 und einen K-Wert von 26 bis 30 auf.

Beispiel 1:

In eine Stahlkugelmühle mit einem Inhalt von 61 Volumenteilen, gefüllt mit 8 kg Stahlkugeln mit einem Durchmesser zwischen 4 und 6 mm, wurden 1,166 kg Tetrahydrofuran, 24,3 g einer 50%igen Lösung des Polyharnstoffurethans (Polymer A), 1000 g eines ferromagnetischen Chromdioxids mit einer mittleren Nadellänge von 0,5 µm, 15 g Zinkoleat, 1,5 g eines handelsüblichen Siliconöls sowie 10 g n-Butylstereat eingefüllt und der Ansatz 36 Stunden dispergiert. Die Dispersion wurde dann unter Druck filtriert und unmittelbar vor dem Auftragen auf eine 15 µm dicke Polyethylenterephthalatfolie unter Rühren, 105 g einer 20%igen Lösung eines Phenoxyharzes, hergestellt aus Epichlorhydrin und Bisphenol A und 210 g einer 20%igen Polyurethanlösung gemäss DE-AS 2753694 zugegeben. Dann wird bezogen auf 1 kg Dispersion 100 g THF und 26 g einer 50%igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80 °C getrocknet und durch Hindurchführen zwischen beheizten Walzen unter Druck (60 ° C, Liniendruck 200 kg/cm) geglättet.

Nach dem Schneiden von 3,81 mm breiten Bändern wurden die elektroakustischen Werte gemäss DIN 45401, 45403 und 45512 (Blatt 12) gegen das Bezugsband C401R geprüft und entsprechen den geforderten Werten. Die Werte der nachfolgend beschriebenen Prüfungen (Test 1–5) sind in der Tabelle 1 aufgeführt.

Test 1

Haftfestigkeit

Bei dieser Messung wird das Haftvermögen einer Magnetschicht auf der Folie beurteilt. Die Messung erfolgt bei einem Prüfklima von 23 ° C und 50% RF, indem ein auf die Schicht geklebtes Klebeband PW 254 mit definiertem Trennradius bei konstanter Abzugsgeschwindigkeit von 0,5 m/s abgezogen wird. Eine Messdose registriert die wirksame Kraft in cN.

Test 2

Quasistatische Reibung

Die Reibungszahl wird durch Messen einer Zugkraft bestimmt, die ein über eine feststehende Messtrommel geführtes Magnetband durch Reibung erzeugt. Die Messtrommel ist eine Stahltrommel mit einer Oberflächenrauhigkeit von ca. 0,15 µm un einem Durchmesser von 70 mm. Das Bandstück ist 25 cm lang und wird bei einem Bandzug von 20 cN mit einer Geschwindigkeit von 1 mm/s und einem Umschlingungswinkel von 180° über die Trommel geführt. Der Zug an der Messdose F ist ein Mass für die Reibungszahl $\mu$ und zwar nach

$$\mu = \frac{1}{\varkappa} \cdot \ln \frac{F}{20}$$

Test 3

Ablagerungstest

Auf einem Recorder werden jeweils 4 mit dem Magnetband gefüllte Kassetten bei 40 °C und 55% rel. Feuchte 20 Stunden lang auf Wiedergabe betrieben. Danach werden die Ablagerungen auf dem Löschkopf, dem Tonkopf und auf der Tonwelle visuell bewertet. Die Stärke der Ablagerungen werden in einer Notenskala (von Note 1: keine Ablagerung bis Note 6: sehr starke Ablagerung) festgehalten und der Mittelwert gebildet.

Test 4

IND-Test

10 mit dem magnetband gefüllte Kassetten werden 4 Wochen bei 40 °C und 93% rel. Feuchte gelagert und anschliessend bei 30 °C und 93% rel. Feuchte in Wiedergabebetrieb gefahren. Die Beurteilung der Ablagerungen erfolgt wie in Test 3.

Test 5

Duplicator-Test

Die Klimabedingung bei Lagerung und Betrieb von jeweils 10 Kassetten entsprechen denen des Tests 4. Danach wird jede Kassette bei 8facher Geschwindigkeit (38 cm/s) einem Durchlauf unterzogen. Zur Auswertung werden die registrierten Bandlaufstörungen und Blockierer herangezogen

Tabelle 1

| | Beispiel 1 | Vgl. Vers. 1 | Vgl. Vers. 1a |
|---|---|---|---|
| Schichtstärke | 5,3 | 5,2 | 5,4 |
| Test 1 | 10 | <5 | 11 |
| Test 2 vor/nach Klimalagerung | 0,20/0,31 | 0,24/32 | 0,27/0,6 |
| Test 3 vor/nach Klimalagerung | 1,5/2,5 | 1,5/2,0 | 2,0/3,5 |
| Test 4 | 1,6 | 1,6 | 2,8* |
| Test 5 | 0 | 0 | 40 |

*von 10 Bändern blockten 3.

und der prozentuale Anteil der ausgefallenen Kassetten als Messwert angegeben.

Vergleichsversuch 1

Es wurde wie in Beispiel 1 verfahren, jedoch wurde ohne das Polyurethan gefahren, aber dafür wurden 315 g einer 20%igen Lösung des Phenoxyharz eingeführt. Die Werte sind in der Tabelle 1 aufgeführt.

Vergleichsversuch 1a

Es wurde wie in Beispiel 1 verfahren, jedoch wurde ohne Phenoxyharz gefahren, dafür wurde mit 315 g des Polyurethans nach Beispiel 1 eingerührt. Die Werte sind in der Tabelle 1 angegeben.

Beispiel 2

Es wurde wie in Beispiel 1 beschrieben verfahren, jedoch wurde anstelle des Polymers A das Polymer B als Komponente 1 und anstelle des Phenoxyharzes ein Polyvinylformal, bestehend aus 82% Vinylformal-, 12% Vinylacetat- und 6% Vinylalkoholeinheiten, eingesetzt. Die Prüfergebnisse sind in der Tabelle 2 angegeben.

Vergleichsversuch 2

Es wurde wie in Beispiel 2 beschrieben verfahren, jedoch wurde die Bindemittelmischung nur aus dem Polymer B (Komponente 1) und der entsprechenden Menge des Polyvinylformals (Komponente 3) zusammengesetzt. Die Prüfergebnisse sind in der Tabelle 2 angegeben.

Vergleichsversuch 2a

Es wurde wie in Beispiel 2 beschrieben verfahren, jedoch wurde die Bindemittelmischung nur aus dem Polymer B (Komponente 1) und dem Polyurethan (Komponente 2) zusammengesetzt. Die Prüfergebnisse sind in der Tabelle 2 angegeben.

Tabelle 2

| | Beispiel 2 | Vgl. Vers. 2 | Vgl. Vers. 2a |
|---|---|---|---|
| Schichtstärke | 5,0 | 5,1 | 5,0 |
| Test 1 | 17 | 5 | 20 |
| Test 2 vor/nach Klimalagerung | 0,19/0,25 | 0,24/0,32 | 0,33/0,70 |
| Test 3 vor/nach Klimalagerung | 1,5/2,5 | 1,5/2,0 | 2,0/3,5 |
| Test 4 | 1,8 | 1,7 | blockt |
| Test 5 | 0 | 0 | blockt |

**Patentanspruch**

Magnetischer Aufzeichnungsträger aus einem nichtmagnetischen Trägermaterial, das mit einer Magnetschicht aus in Bindemitteln und Zusatzstoffen dispergiertem, feinteiligem anisotropem magnetischem Material versehen ist und wobei das Bindemittel ein Gemisch aus einem niedermolekularen OH-gruppenhaltigen Polyharnstoffurethan, das als unpigmentierter mit Polyisocyanat vernetzter Film eine Reissfestigkeit von grösser 15 N/mm$^2$, eine Reissdehnung von grösser 50%, einen E-Modul von grösser 150 N/mm$^2$ und eine Pendelhärte von 30 bis 140 s aufweist, einem hochmolekularen, thermoplastischen, in Tetrahydrofuran löslichen, linearen Polyurethan, dessen unpigmentierter Film eine Reissfestigkeit zwischen 40 und 95 N/mm$^2$ und eine Reissdehnung von 100 bis 1400% aufweist, und einem weiteren physikalisch trocknenden Bindemittel ist, wobei das Gemisch aus

1. 50 bis 90 Gew.% eines niedermolekularen OH-gruppenhaltigen Polyharnstoffurethans mit einer OH-Zahl zwischen 30 und 130 und einem Molekulargewicht zwischen 2000 und 30000, welches aus

1. IA 1 Mol eines Polydiols mit einem Molekulargewicht zwischen 400 und 4000,

1. IB 0,2 bis 10 Mol eines Diols mit 2 bis 18 Kohlenstoffatomen,

1. IC 0,1 bis 4 Mol eines primären oder sekundären Aminoalkohols mit 2 bis 20 Kohlenstoffatomen,

1. ID 0 bis 1 Mol eines Triols und

1. II 1,20 bis 13 Mol eines Diisocyanats mit 6 bis 30 Kohlenstoffatomen, wobei der Anteil der NCO-Gruppen des Diisocyanats, bezogen auf die Komponenten 1. IA bis 1. ID, 65 bis 95% der äquivalenten Menge an OH- und NH-Gruppen beträgt, hergestellt worden ist.

2. 5 bis 45 Gew.% eines hochmolekularen, thermoplastischen, in Tetrahydrofuran löslichen linearen Polyurethans mit einem Molekulargewicht zwischen 40000 und 150000, welches aus

2. A 1 Mol eines Polyesterols mit einem Molekulargewicht zwischen 400 und 4000,

2. B 0,3 bis 15 Mol eines geradkettigen aliphatischen Diols mit 2 bis 10 Kohlenstoffatomen,

2. C 0 bis 1,5 Mol eines Triols mit 3 bis 10 Kohlenstoffatomen und

2. D 1,25 bis 17 Mol eines Diisocyanats mit 6 bis 30 Kohlenstoffatomen, wobei die Menge an NCO-Gruppen etwa äquivalent der Menge an OH-Gruppen der Summe der Komponenten 2. A bis 2. C ist, hergestellt worden ist und

3. 5 bis 45 Gew.% eines Polyvinylformalbindemittels mit einem Vinylformalgruppengehalt von mindestens 65%, oder eines Copolymeren aus 50 bis 95 Gew.% Vinylchlorid und 5 bis 50 Gew.% eines Mono- oder Diesters eines aliphatischen Diols mit 2 bis 4 Kohlenstoffatomen mit Acrylsäure oder Methacrylsäure, oder eines Phenoxyharzes, dessen Konstitution der Formel

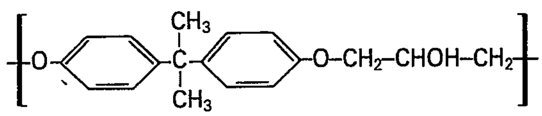

mit n annähernd gleich 100 entspricht, oder eines Di- und/oder Triesters der Cellulose mit mindestens einer Garbonsäure mit 1 bis 4 Kohlenstoffatomen, oder eines Copolymerisats aus 91% Vinylchlorid-, 3% Vinylacetat- und 6% Vinylalkoholgrundeinheiten, besteht und das niedermolekulare Polyharnstoffurethan und das hochmolekulare Polyurethan mit einer Polyisocyanatkomponente in einem OH: NCO-Verhältnis von 1:0,3 bis 1:2,0 vernetzt worden sind.

**Claim**

A magnetic recording medium which consists of a non-magnetic base which is provided with a magnetic layer, consisting of finely divided anisotropic magnetic material dispersed in binders an additives, and in which the binder is a mixture based on a low molecular weight OH-containing polyurea-urethane, which, as an unpigmented film crosslinked with polyisocyanate, has an tensile strength greater than 15 $N/mm^2$, an elongation at break greater than 50%, a modulus of elasticity greater than 150 $N/mm^2$, and a pendulum hardness of from 30 to 140 s, a high molecular weight, thermoplastic, Linear polyurethane which is soluble in tetrahydrofuran and whose unpigmented film has a tensile strength of from 40 to 95 $N/mm^2$ and an elongation at break of from 100 to 1400%, an a further physically drying binder, wherein the mixture consists of

1. from 50 to 90% by weight of a low molecular weight OH-contianing polyurea-urethane which has an OH number of from 30 to 130 and a molecular weight of from 2000 to 30000, and has been prepared from

1.IA 1 mole of a polydiol having a molecular weight of from 400 to 4000,

1.IB from 0.2 to 10 moles of a diol of 2 to 18 carbon atoms,

1.IC from 0.1 to 4 moles of a primary or secondary aminoalcohol of 2 to 20 carbon atoms,

1.ID from 0 to 1 mole of a triol and

1.II from 1.20 to 13 moles of a diisocyanate of 6 to 30 carbon atoms, the amount of NCO groups of the diisocyanate being from 65 to 95%, based on components 1.IA to 1.ID, of the number of equivalents of OH and NH groups,

2. from 5 to 45% by weight of a high molecular weight, thermoplastic, linear polyurethane which is soluble in tetrahydrofuran, has a molecular weight of from 40000 to 150000 and has been prepared from

2.A 1 mole of a polyesterol having a molecular weight of from 400 to 4000,

2.B from 0.3 to 15 moles of a straight-chain aliphatic diol of 2 to 10 carbon atoms,

2.C from 0 to 1.5 moles of a triol of 3 to 10 carbon atoms and

2.D from 1.25 to 17 moles of a diisocyanate of 6 to 30 carbon atoms, the amount of NCO groups being about the same as the total amount of OH groups in components 2.A to 2.C together, and

3. from 5 to 45% by weight of a polyvinylformal binder containing not less than 65% of vinylformal groups, or of a copolymer of from 50 to 95% by weight of vinyl chloride and from 5 to 50% by weight of a mono- or diester of an aliphatic diol of 2 to 4 carbon atoms with acrylic acid or methacrylic acid, or of a phenoxy resin of the formula

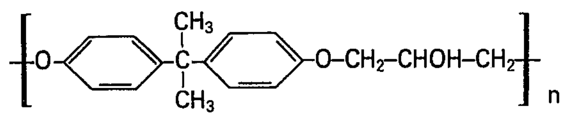

where n is about 100, or of a di- and/or triester of cellulose with one or more carboxylic acids of 1 to 4 carbon atoms, or of a copolymer of 91% of vinyl chlorids base units, 3% of vinyl acetate base units and 6% of vinyl alcohol base units,
and the low molecular weight polyurea-urethane and the high molecular weight polyurethane have been crosslinked with a polyisocyanate component in an OH:NCO ratio of from 1:0.3 to 1:2.0.

**Revendication**

Support d'enregistrement magnétique en un matériau support non magnétique qui est muni d'une couche magnétique, en matériau magnétique, anisotrope, finement réparti, dispersé dans un liant et des additifs, et le liant étant un mélange d'un polyuréeuréthane à groupes OH, de faible poids moléculaire, qui, sous forme de film réticulé avec du polyisocianate et non pigmenté, présente une résistance en traction de plus de 15 $N/mm^2$, un alongement en traction de plus de 50%, un module E de plus de 150 $N/mm^2$ et une dureté au pendule de 30 à 140 s, d'un polyuréthane linéaire, soluble dans le tétrahydrofurane, thermoplastique, de poids moléculaire élevé, dont le film non pigmenté présente une résistance en traction comprise entre 40 et 95 $N/mm^2$ et un allongement en traction de 100 à 1400%, et d'un autre liant séchant physiquement, le mélange étant constitué de:

1. 50 à 90% en poids d'un polyuréeuréthane, à groupes OH, de faible poids moléculaire, d'un indice OH compris entre 30 et 130 et d'un poids

moléculaire compris entre 2000 et 30000, qui a été préparé à partir de

1.IA 1 mole d'un polydiol d'un poids moléculaire compris entre 400 et 4000,

1.IB 0,2 à 10 moles d'un diol ayant 2 à 18 atomes de carbone,

1.IC 0,1 à 4 moles d'un aminoalcool primaire ou secondaire ayant 2 à 20 atomes de carbone,

1.ID 0 à 1 mole d'un triol et

1.II 1,20 à 13 moles d'un diisocyanate ayant 6 à 30 atomes de carbone, la proportion de groupes NCO du diisocyanate, rapporté aux composants 1.IA à 1.ID étant de 65 à 95% de la quantité équivalente en groupes OH et NH.

2. 5 à 45% en poids d'un polyuréthane linéaire soluble dans le tétrahydrofurane, thermoplastique, de poids moléculaire élevé, d'un poids moléculaire compris entre 40000 et 150000, qui a été préparé à partir de

2.A 1 mole d'un polyestérol d'un poids moléculaire compris entre 400 et 4000,

2.B 0,3 à 15 moles d'un diol alipathique à chaîne droite, ayant 2 à 10 atomes de carbone,

2.C 0 à 1,5 mole d'un triol de 3 à 10 atomes de carbone et

2.D 1,25 à 17 moles d'un diisocyanate ayant 6 à 30 atomes de carbone, la quantité de groupes NCO étant à peu près équivalente à la quantité de groupes OH de la somme des composants 2.A à 2.C, et

3. 5 à 45% en poids d'un liant polyvinylformal à teneur en groupes vinylformal d'au moins 65% ou d'un copolymère de 50 à 95% en poids de chlorure de vinyle et 5 à 50% en poids d'un mono- ou diester d'un diol aliphatique ayant 2 à 4 atomes de carbone avec de l'acide acrylique ou méthacrylique, ou d'une résine phenoxy, dont la constitution correspond à la formule

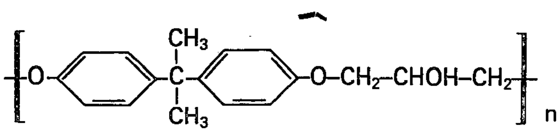

avec n égal à peu près à 100, ou

d'un di- et/ou triester de cellulose avec au moins un autre acide carboxylique de 1 à 4 atomes de carbone, ou d'un copolymérisat de 91% de motifs de base chlorure de vinyle, 3% de motifs acétate de vinyle et 6% de motifs alcool vinylique,

et le polyuréeuréthane à bas poids moléculaire et le polyuréthane à haut poids moléculaire ont été réticulés avec un composant polyisocyanate en un rapport OH/NCO de 1/0,3 à 1/2,0.